# EUROPEAN PATENT APPLICATION

(11) **EP 3 290 096 A1**
(43) Date of publication of application: **07.03.2018**
(21) Application number: 17194057.0
(22) Date of filing: 02.02.2011
(51) Int. Cl.: B01D 21/00, E03F 5/14

(54) **INSPECTION CHAMBER WITH FILTER**

(30) Priority: 03.02.2010 NL 1037680
(62) Divisional of application: 11000813.3
(71) Applicant: Wavin B.V., 8011 CW Zwolle (NL)
(72) Inventor: Roelfsema, Marcel, 7701 BS Dedemsvaart (NL); van Dijk, Berend Jan, 7701 BS Dedemsvaart (NL); Huisjes, Alwin, 7701 BS Dedemsvaart (NL); Jager, Harm Jantinus Marcel, 7701 BS Dedemsvaart (NL)
(74) Representative: Hoffmann Eitle

(57) **Abstract**

A water reservoir (1) for use in an underground water discharge system comprises: a first compartment (14) including a first opening (2) for connection to a supply side of the water discharge system so as to receive water to be treated, or to a discharge side of the water discharge system so as to discharge treated water from the reservoir (1), and a second opening (3) for connection to the other one of the supply side and the discharge side of the water discharge system so as to receive water to be treated or discharge treated water from the reservoir (1), respectively; a second compartment (16); and a water treatment means (10) disposed between the first opening (2) and the second opening (3) for treating water flowing from one (2; 3) of the openings to the other (3; 2). The water treatment means (10) comprises: an inner shaft (11), the inside of which communicates the first compartment (14) with the second compartment (16); and a helical sedimentation channel (12) surrounding the inner shaft (11) and communicating the second compartment (16) with the first compartment (14). The first and second compartments (14, 16) are separated from each other by a partition plate (15), comprising a first through hole (17) for accessing the inner shaft (11) and a second through hole (19) for accessing the sedimentation channel (12).

## Description

The invention relates to an inspection chamber provided with a filter for cleaning water that has entered the inspection chamber.

The invention provides an inspection chamber for use in an underground water discharge system, the inspection chamber comprising a first outlet opening for connection to the water discharge system; a second outlet opening for connection to the water discharge system; a first compartment; a second compartment; an inner shaft, which communicates with the first compartment, the second compartment, and the first outlet opening; and a sedimentation channel that is spiralled around the inner shaft and communicates with the second compartment and the second outlet opening. Such configuration provides for a compact, but very effective sedimentation filter, wherein the entering water is passed along a relatively long sedimentation channel, giving ample time for contaminations to settle down.

Further advantageous embodiments of an inspection chamber and a filter unit according to the present invention are set forth in the dependent claims.

To explain the invention, exemplary embodiments thereof will hereinafter be described with reference to the accompanying drawings, wherein:
FIG. 1 shows, in cross sectional view, a water reservoir, more particular an inspection chamber, with water treatment means, more particular a sedimentation filter, according to the invention;
FIG. 2 shows the water treatment means of Figure 1 in further detail, in partly cut-away, perspective view;
FIG. 3 shows the water treatment means of Figure 2 in top plan view;
FIG. 4 shows a bypass configuration that can advantageously be used with the water treatment means of Figures 1-3; and
FIG. 5 shows an inlet configuration that can advantageously be used with the water treatment means of Figures 1-3.

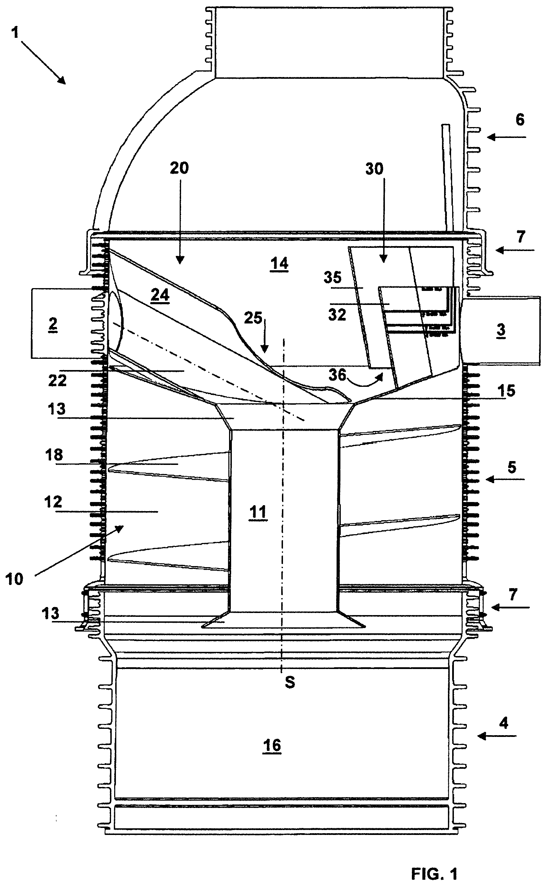

Figure 1 shows a water reservoir 1 according to the invention, more particularly an inspection chamber 1. The water reservoir 1 comprises a first outlet opening 2, a second outlet opening 3 and a water treatment means 10, more particularly a sedimentation filter 10, disposed between said first and second outlet opening 2, 3. In use, one of the first and second outlet openings 2, 3 is arranged to communicate with a supply side of a water discharge system so as to receive water that is to be filtered, the other one of the first and second outlet openings 2, 3 is arranged to communicate with a discharge side of the water discharge system, so as to discharge water that has been filtered.

The inspection chamber 1 can be composed of a bottom part 4, a shaft part 5 and an upper part 6, which can be connected to each other via suitable coupling means, such as the illustrated spigot-socket connection 7. In some embodiments additional shaft parts 5' (not shown) may be provided to increase the inspection chamber's height. In other embodiments, the upper part 6 may be coupled directly to the bottom part 4, without intermediate shaft part 5. In some embodiments, the upper part 6 may be omitted all together. In some embodiments, the bottom part 4 and one or more shaft parts 5, 5' may be integrally connected. The parts 4, 5, 6 may be made of plastic and can for instance be manufactured by injection moulding or rotation moulding.

The sedimentation filter 10 comprises an inner shaft 11, surrounded by a helical sedimentation channel 12. The inner shaft 11 communicates with a first, upper compartment 14 and a second, lower compartment 16. The upper and lower end 13 of the inner shaft 11 may be flared outward as shown.

The sedimentation channel 12 is formed between adjacent windings of a helical flight 18. The flight 18 is fitted between the inner shaft 11 and the inner side of the shaft part 5 in such way that a channel 12 of closed cross section is formed. The channel 12 communicates with the first compartment 14 and the second compartment 16 via its respective open ends solely.

The first and second compartment 14, 16 are separated from each other by a partition plate 15 which may have a ramped or conical configuration, as shown. The partition plate 15 has a first, central through hole 17 that provides access to the inner shaft 11, and a second through hole 19 that provides access to the sedimentation channel 12. The second through hole 19 is preferably located near the second outlet opening 3.

In the illustrated embodiment, the first and second outlet opening 2, 3 extend at the same level. This may help to avoid the creation of level differences elsewhere in the sewer system. As a result, no unwanted vertical pipe section will be needed to overcome such level differences.

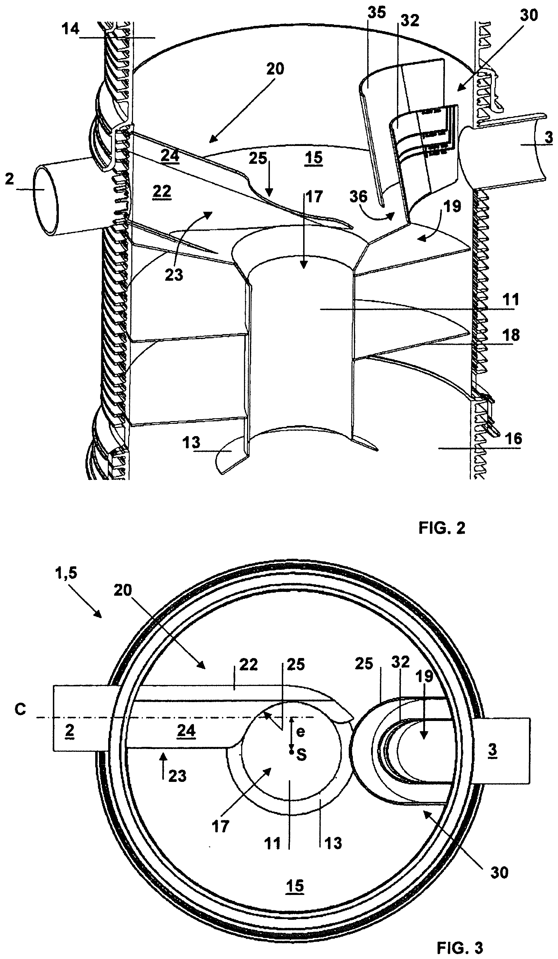

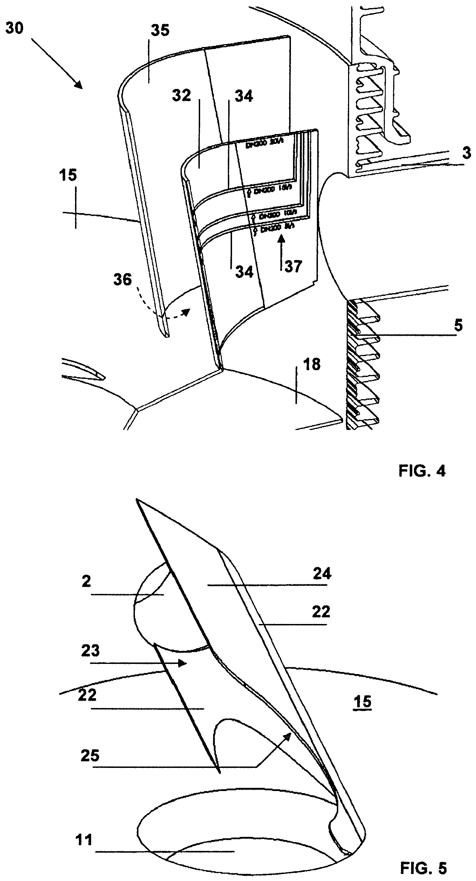

An inlet device 20 may be provided between the first outlet opening 2 and the inner shaft 11, to allow communication between the shaft 11 and said opening 2. The illustrated inlet device 20 comprises a chute 22 that slants downward from the first outlet opening 2 to the inner shaft 11. The chute 22 has a semi-circular cross section, as perhaps best seen in Figure 5. The chute 22 is oriented such that its open side 23 does not face upward but sideward, at least to a large extent. As best seen in Figure 3, the centre axis C of the chute 22 crosses the centre axis S of the shaft 11 at an offset distance e. The inlet device 20 may further comprise a deflection plate 24 that extends above the chute 22 so as to shield its open side 23, at least the part thereof that faces upward, so as to shield this open side when seen in top plan view (Figure 3). In the illustrated embodiment, the deflection plate 24 is a straight plate, which extends from the upper longitudinal side of the chute 22, in a substantially tangential direction. An end portion of the deflection plate 24 that extends across the inner shaft 11 is provided with a curved cut-out 25. This cut-out 25 is shaped such that the deflection plane 24 does not obstruct the access opening of the inner shaft 11. This is best seen in Figure 3. Thus, the shaft 11 remains fully accessible. This is for instance advantageous when cleaning the filter, by inserting a suction hose or tube in the shaft.

A bypass device 30 may be provided to allow excess water that enters the inspection chamber 1 to bypass the water treatment means such as the sedimentation filter 10. The illustrated bypass device 30 extends between the first and second outlet opening 2, 3 and comprises an overflow provision 32. The overflow provision 32 comprises a plate that extends upward from the partition plate 15, around the second through hole 19 and the second outlet opening 3. As perhaps best seen in Figure 4, the plate 32 may be provided with weakening lines 34 where the plate 32 can be readily bent, severed, cut and/or broken away. Each weakening line 34 may be provided with an appropriate marking 37, which may assist an installer into adjusting the overflow plate 32 correctly.

The bypass device 30 may further comprise a second plate 35 which extends around the overflow plate 32, at some distance there from. The height H of this second plate 35 exceeds the height of the overflow plate 32 and preferably exceeds the maximum expected water level in the inspection chamber 1. The plate 35 further comprises one or more gaps or through holes 36 which are all located well below the overflow level (i.e. upper edge) of the overflow plate 32.

The inspection chamber with filter operates as follows. In use, the first and second outlet openings 2,3 may be connected to a sewer system, so as to have the first outlet opening 2 serve as supply opening and the second outlet opening 3 serve as discharge opening. Water entering the first outlet opening 2 will flow down the chute 22 into the inner shaft 11. Thanks to the orientation of the chute 22, floatables such as sticks, branches, leaves and the like that may be carried along by the water will exit the chute 22 via the open side 23. These floatables may accumulate in the first compartment 14, where they can easily be removed from time to time via the access opening in the upper part 6 of the inspection chamber.

The deflection plate 24 helps to urge down larger and/or heavier particles, such as sand and stones. Thanks to the straight shape and tangential orientation, this urging down function will not interfere with the exit of the floatables, because the floatables will not become trapped or caught behind the plate 24. This could be different if the deflection plate were to be shaped as a curved extension of the chute 22 in circular direction. In such case, floatables could become trapped behind the deflection plate.

If sand and other particles escape from the chute 22 together with the floatables, these particles will collect in the first compartment 14. There they will sink to the partition plate 15 and slide along said plate into the shaft 11.

Thanks to the offset location of the chute 22 with regard to the centre axis S of the inner shaft 11, the water from the chute will enter the shaft in tangential direction. This may cause the inflow to be laminar rather than turbulent. As a result, conditions within the inner shaft 11 are optimal for the sedimentation process. The heavier particles will sink and settle at the bottom of the second compartment 16. In the absence of disturbing turbulences, these particles will not spread across the bottom but will accumulate just below the shaft 11. This will facilitate cleaning of the filter 10, as most of said heavier particles can be removed by simply inserting a suction hose through the shaft 11.

The lighter particles will take longer to sink. Part of these lighter particles will therefore still be suspended in the water as the water enters the sedimentation channel 12. In this channel 12, the water travels slowly upward, giving ample time to the remaining particles to descend onto the helical flight 18. By the time the water reaches the through hole 19 in the partition plate 15, most particles will have settled down. The filtered water can subsequently be discharged from the inspection chamber 1 via the second outlet opening 3.

The filter performance will depend on the retention time of the water in the filter. If this retention time is increased, the filter performance may be better. The retention time can be increased by limiting the inflow rate. Typically, a filter 10 according to the invention will be designed to give a good filter performance up to a certain nominal inflow rate. This nominal inflow rate may be based on statistical precipitation data or the like. Of course, from time to time, the actual inflow rate will exceed this nominal inflow rate (e.g. due to heavy rain fall or excess melting water). In such case, the actual filter performance will be suboptimal. In addition, the excessive inflow rate may stir up the contaminations which have accumulated in the filter over time and cause said contaminations to be mixed with the outgoing water.

According to the invention, the inflow rate can be limited by having excess water bypass the filter 10 via the bypass device 30. The bypass device 30 is configured to cap the inflow rate to the filter at a predetermined nominal value, thereby ensuring optimum filter performance. To that end, the bypass device 30 comprises an overflow plate 32 of which the overflow level can be adjusted to correspond to the aforementioned nominal value. When the inflow rate exceeds the nominal value, the water level in the inspection chamber 1 rises so as to exceed the overflow level. As a result, it will flow over plate 32 via gap 36 in the second plate 35 and will leave the inspection chamber 1 unfiltered, via the second outlet 3 where it will mix with the filtered water exiting the filter 10.

According to the invention, the overflow level can be lowered by cutting, braking or bending away an upper edge portion of the overflow plate 32. To facilitate such adjustment, the plate 32 is provided with weakening lines, wherein each line corresponds to a particular nominal inflow rate. Thus, an installer can adjust the nominal inflow rate, in accordance with local flow rate statistics and preferences.

For instance, if it is found to be important that the filter performs at its optimal capacity at all times, the overflow level should be set at the nominal inflow rate for which the filter has been designed. As soon as the actual inflow rate exceeds said nominal flow rate, the surplus will be discharged unfiltered via the bypass device 30. This may for instance be acceptable where it is expected that the actual inflow rate will not exceed the nominal flow rate that often. It may thus provide an alternative for situations where there insufficient space for an attenuation tank upstream of the inspection chamber (with which peak flows would normally be attenuated).

However, if it is found to be more important that all water is filtered than that the filter performs optimal at all times, the overflow level can be set at a higher level than the nominal inflow rate for which the filter has been designed. In such case, peak flow rates will not automatically be discharged unfiltered via the bypass, but will be passed along the filter, where they will be filtered to some extent, but not optimal.

It will be understood that a bypass device 30 according to the invention is equally applicable with other filters or more generally, other water treatment means, in particular water treatment means that require a certain nominal or maximum inflow rate to function optimal. The present invention therefore also relates to a bypass device having the features of a bypass device as described here above and in the dependent claims, but without the limiting features of the main claim.

It will be appreciated from the description and drawing that the various features of the inspection chamber (e.g. the closed cross section of the sedimentation channel, the inlet device with its gently sloping chute and its offset location and the bypass with its ability to limit the inflow rate) all help to minimize the generation of turbulence as water is passed through the inspection chamber, and as such prevent the sedimentation process from becoming disturbed. This may enhance the effectiveness of the separation process.

The invention is not in any way limited to the exemplary embodiments presented in the description and drawing. All combinations (of parts) of the embodiments shown and described are explicitly understood to be incorporated within this description and are explicitly understood to fall within the scope of the invention. Moreover, many variations are possible within the scope of the invention, as outlined by the claims.

For instance, in order to lengthen the sedimentation channel and enhance the filter performance, the pitch of the helical flight may be reduced and/or a double or triple helix may be applied.

To prevent the water from the bypass from being mixed with the filtered water, the bypass device could communicate with a third outlet opening. Alternatively, the bypass device could communicate with a buffer, in which the excess water could be temporarily stored. From there, it could be rerouted into the inspection chamber once the inflow rate would have dropped below the nominal value.

The flow direction through the sedimentation filter 10 may be reversed. That is, the water may enter the sedimentation channel via through hole 19, flow downward to the second compartment 16 and from there rise up in the inner shaft 11 and exit the inspection chamber via first outlet opening 2. Of course, in such case, the inlet device 20 and bypass device 30 would need to be reversed accordingly.

Instead of heaving a stationary overflow plate 32, with parts that can be broken or bent away, the overflow level could also be adjusted by having a displaceable overflow plate 32, e.g. a rotatable or translatable plate.

The chute 22 can be provided with a U-shaped or C-shaped cross section instead of a semi-circular cross section.

The inner shaft and the helical flight can be supplied as a unit that can be readily installed in existing inspection chambers or other water reservoirs. Such unit may be complemented with a partition plate 15, an inlet device 20 and/or a bypass device 30, which may form integral part of the unit or may be added as modular components.

The following numbered paragraphs provide further disclosure of the present subject matter.
i. Inspection chamber for use in an underground water discharge system, the inspection chamber comprising:
   - a first outlet opening for connection to the water discharge system;
   - a second outlet opening for connection to the water discharge system;
   - a first compartment;
   - a second compartment;
   - an inner shaft, which communicates with the first compartment, the second compartment, and the first outlet opening; and
   - a sedimentation channel that is spiralled around the inner shaft and communicates with the second compartment and the second outlet opening.
ii. Inspection chamber according to paragraph i, wherein the sedimentation channel is of closed cross section, having only its open ends communicate with the second compartment and the second outlet opening respectively.
iii. Inspection chamber according to paragraph i or ii, wherein in use, one of the first and second outlet openings is arranged to communicate with a supply side of the water discharge system so as to receive water to be filtered, and the other one of the first and second outlet openings is arranged to communicate with a discharge side of the water discharge system, so as to discharge treated water from the inspection chamber.
iv. Inspection chamber according to anyone of paragraphs i-iii, wherein both outlet openings are provided in the same compartment.
v. Inspection chamber according to anyone of paragraphs i-iv, wherein both outlet openings are provided in the first compartment.
vi. Inspection chamber according to anyone of paragraphs i-v, wherein the first compartment is located above the second compartment, in normal use.
vii. Inspection chamber according to anyone of paragraphs i-vi, wherein the first and second compartment are separated from each other by a partition plate, comprising a first through hole for accessing the inner shaft and a second through hole for accessing the sedimentation channel.
viii. Inspection chamber according to anyone of paragraphs i-vii, wherein an inlet device is provided between the first outlet opening and the inner shaft, the inlet device being arranged to separate floatables from water that passes the inlet device during use.
ix. Inspection chamber according to paragraph viii, wherein the inlet device comprises a chute, extending between the first outlet opening and the inner shaft, wherein the chute has an open cross section and wherein the chute is oriented such that the open side of its cross section is mainly facing sideward, in normal use.
x. Inspection chamber according to paragraph ix, wherein the inlet chute has a semi-circular cross section.
xi. Inspection chamber according to anyone of paragraphs viii-x, wherein a center axis of the inlet device crosses the center axis of the inner shaft.
xii. Inspection chamber according to anyone of paragraphs viii-xi, wherein the inlet device is arranged such that, in use, water will enter in a laminar rather than a turbulent flow.
xiii. Inspection chamber according to anyone of paragraphs viii-xii, wherein the inlet device comprises a deflection plate, which extends above the chute, so as to shield its open side, in top plan view.
xiv. Inspection chamber according to paragraph xiii, wherein an end portion of the deflection plate, that extends across the inner shaft, is cut away such that the entrance opening of the inner shaft is unobstructed, at least in top plan view.
xv. Inspection chamber according to anyone of paragraphs i-xiv, wherein a bypass device is provided, allowing excess water to bypass the sedimentation channel.
xvi. Inspection chamber according to paragraph xv, wherein the bypass device extends between the first and second outlet opening.
xvii Inspection chamber according to paragraph xv or xvi, wherein the flow rate through the bypass device is adjustable.
xviii. Inspection chamber according to anyone of paragraphs xv-xvii, wherein the bypass device comprises an overflow provision.
xix. Inspection chamber according to paragraph xviii, wherein part of the overflow provision can be cut or broken away, so as to adjust an overflow level.
xx. Inspection chamber according to paragraph xvii or xix, wherein the overflow provision is provided with markings and/ or break lines, to facilitate adjustment of the overflow level.
xxi. Inspection chamber according to anyone of paragraphs xv-xx, wherein the bypass device comprises means to separate floatables from water that passes the second outlet opening during use.
xxii. Filter unit for use in a water reservoir, more particular an inspection chamber, the filter unit comprising:
   - a shaft, and
   - a helical flight, surrounding the shaft, from its lower end to its upper end, wherein the filter unit is dimensioned such, that when mounted in the water reservoir, the helical flight extends up to an inner wall of the reservoir so as to form a helical channel of closed cross section between the shaft, the water reservoir and the helical flight.
xxiii. Water reservoir, for instance an inspection chamber, comprising:
   - a first outlet opening;
   - a second outlet opening;
   - water treatment means disposed between the inlet and the outlet opening for treating water flowing from the inlet to the outlet; and
   - a bypass device arranged between the inlet and the outlet wherein the performance of the water treatment means is controllable by regulating the flow rate through the bypass device.
xxiv. Inspection chamber for use in an underground water discharge system, the inspection chamber comprising:
   - a first outlet opening for connection to the water discharge system;
   - a second outlet opening for connection to the water discharge system;
   - a first compartment;
   - a second compartment;
   - an inner shaft, which communicates with the first compartment, the second compartment, and the first outlet opening; and
   - a sedimentation channel that is spiralled around the inner shaft and communicates with the second compartment and the second outlet opening.
xxv. Inspection chamber according to paragraph xxiv, wherein both outlet openings are provided in the first compartment which, in normal use, is located above the second compartment.
xxvi. Inspection chamber according to paragraph xxiv or xxv, wherein the sedimentation channel is of closed cross section.
xxvii. Inspection chamber according to anyone of the preceding paragraphs, wherein an inlet device is provided between the first outlet opening and the inner shaft, the inlet device being arranged to separate floatables from water that passes the inlet device during use.
xxviii. Inspection chamber according to paragraph xxvii, wherein the inlet device comprises a chute, extending between the first outlet opening and the inner shaft, wherein the chute has an open cross section and wherein the chute is oriented such that the open side of its cross section is mainly facing sideward, in normal use.
xxix. Inspection chamber according to anyone of paragraphs xxvii or xxviii, wherein a center axis of the inlet device crosses the center axis of the inner shaft.
xxx. Inspection chamber according to anyone of paragraphs xxvii-xxix, wherein the inlet device comprises a deflection plate, which extends above the chute, so as to shield its open side, in top plan view.
xxxi. Inspection chamber according to paragraph xxx, wherein an end portion of the deflection plate that extends across the inner shaft is cut away such, that the entrance opening of the inner shaft is unobstructed, at least in top plan view.
xxxii. Inspection chamber according to anyone of the preceding paragraphs, wherein a bypass device is provided, allowing excess water to bypass the sedimentation channel.
xxxiii. Inspection chamber according to paragraph xxxii, wherein the bypass device extends between the first and second outlet opening.
xxxiv. Inspection chamber according to paragraph xxxii or xxxiii, wherein the flow rate through the bypass device is adjustable.
xxxv. Inspection chamber according to anyone of paragraphs xxxii- xxxiv, wherein the bypass device comprises an overflow provision.
xxxvi. Inspection chamber according to paragraph xxxv wherein part of the overflow provision can be cut or broken away, so as to adjust an overflow level.
xxxvii. Filter unit for use in a water reservoir, more particular an inspection chamber, the filter unit comprising:
   - a shaft, and
   - a helical flight, surrounding the shaft, from its lower end to its upper end, wherein the filter unit is dimensioned such, that when mounted in the water reservoir, the helical flight extends up to an inner wall of the reservoir so as to form a helical channel of closed cross section between the shaft, the water reservoir and the helical flight.
xxxviii. Water reservoir, for instance an inspection chamber, comprising:
   - a first outlet opening;
   - a second outlet opening;
   - water treatment means disposed between the inlet and the outlet opening for treating water flowing from the inlet to the outlet; and
   - a bypass device arranged between the inlet and the outlet wherein the performance of the water treatment means is controllable by regulating the flow rate through the bypass device.

These and may comparable variations are understood to fall within the scope of the invention as outlined by the claims.

## Claims

1. A water reservoir (1) for use in an underground water discharge system, the water reservoir (1) comprising:
- a first compartment (14) including a first opening (2) for connection to a supply side of the water discharge system so as to receive water to be treated, or to a discharge side of the water discharge system so as to discharge treated water from the reservoir (1), and a second opening (3) for connection to the other one of the supply side and the discharge side of the water discharge system so as to receive water to be treated or discharge treated water from the reservoir (1), respectively;
- a second compartment (16); and
- a water treatment means (10) disposed between the first opening (2) and the second opening (3) for treating water flowing from one (2; 3) of the openings to the other (3; 2), the water treatment means (10) comprising:
an inner shaft (11), the inside of which communicates the first compartment (14) with the second compartment (16); and
a helical sedimentation channel (12) surrounding the inner shaft (11) and communicating the second compartment (16) with the first compartment (14),
wherein the first and second compartments (14, 16) are separated from each other by a partition plate (15), comprising a first through hole (17) for accessing the inner shaft (11) and a second through hole (19) for accessing the sedimentation channel (12).

2. The water reservoir (1) according to claim 1, wherein the first compartment (14) is, in normal use, located above the second compartment (16).

3. The water reservoir (1) according to claim 1 or 2, wherein the sedimentation channel (12) is of closed cross section.

4. The water reservoir (1) according to anyone of the preceding claims, wherein an inlet device (20) is provided between the first opening (2) and the inner shaft (11), the inlet device (20) comprising a chute (22) extending between the first opening (2) and the inner shaft (11), and being arranged to separate floatables from water that passes the inlet device (20) during use.

5. The water reservoir (1) according to claim 4, wherein the chute (22) has an open cross section and is oriented such that the open side of its cross section is mainly facing sideward, in such a way that in use the chute (22) has an open side through which the floatables are able to exit to the first compartment (14).

6. The water reservoir (1) according to anyone of claims 4 or 5, wherein a center axis of the inlet device (20) crosses the center axis of the inner shaft (11).

7. The water reservoir (1) according to anyone of claims 4-6, wherein the inlet device (20) comprises a deflection plate (24), which extends above the chute (22), so as to shield its open side, in top plan view.

8. The water reservoir (1) according to claim 7, wherein an end portion of the deflection plate (24) that extends across the inner shaft (11) is cut away such, that the entrance opening of the inner shaft (11) is unobstructed, at least in top plan view.

9. The water reservoir (1) according to anyone of the preceding claims, wherein a bypass device (30) is provided, allowing excess water to bypass the sedimentation channel (12).

10. The water reservoir (1) according to claim 9, wherein the bypass device (30) extends between the first (2) and second opening (3).

11. The water reservoir (1) according to claim 9 or 10, wherein the flow rate through the bypass device (30) is adjustable.

12. The water reservoir (1) according to anyone of claims 9-11, wherein the bypass device (30) comprises an overflow provision (32).

13. The water reservoir (1) according to claim 12, wherein part of the overflow provision (32) can be cut or broken away, so as to adjust an overflow level.

14. The water reservoir (1) according to any one of the preceding claims, wherein the water treatment means (10) is dimensioned such, that when mounted in the water reservoir (1), the helical sedimentation channel (12) extends up to an inner wall of the reservoir (1) so as to form a helical channel of closed cross section between the shaft (11) and the inner wall of the water reservoir (1).

15. The water reservoir (1) according to any one of the preceding claims, in which the water reservoir (1) is an inspection chamber.
